**Europäisches Patentamt**

**European Patent Office**

**Office européen des brevets**

(11) Publication number : **0 182 484 B2**

# (12) NEW EUROPEAN PATENT SPECIFICATION

(45) Date of publication of the new patent specification : **05.04.95 Bulletin 95/14**

(51) Int. Cl.[6] : **G02F 1/133, H01C 7/10**

(21) Application number : **85307198.3**

(22) Date of filing : **08.10.85**

(54) **Liquid crystal display device.**

(30) Priority : **16.10.84 JP 216582/84**

(43) Date of publication of application :
**28.05.86 Bulletin 86/22**

(45) Publication of the grant of the patent :
**15.01.92 Bulletin 92/03**

(45) Mention of the opposition decision :
**05.04.95 Bulletin 95/14**

(84) Designated Contracting States :
**CH DE FR GB LI**

(56) References cited :
**EP-A- 0 102 452
EP-A- 0 174 431
GB-A- 2 050 031
JP-A-52 149 090
US-A- 4 223 308
US-A- 4 413 883**

(56) References cited :
**Proceedimgs of the Sixth Intern. Conference on Chemical Vapor Deposition 1977, pp 483-492
The Electrochemical Society, Extended Abstracts, vol. 76-2 (Abstract No. 244), pp 629-630
Proceedings of the Symposium on Silicon Nitride Thin Film Insulating Films, Vol. 83-8, pp. 3-311
S.M. Sze "Physics of Semiconductor Devices", John Wiley & Sons, New York, Chichester-Brisbane-Toronto 1981, pp 402-404**

(73) Proprietor : **SEIKO INSTRUMENTS INC.
31-1, Kameido 6-chome
Koto-ku
Tokyo 136 (JP)**

(72) Inventor : **Suzuki, Mitsuya
Seiko Instr. & Electronics Ltd.
6-31-1, Kameido
Koto-ku Tokyo (JP)**

(74) Representative : **Sturt, Clifford Mark et al
J. MILLER & CO.
34 Bedford Row
Holborn
London WC1R 4JH (GB)**

EP 0 182 484 B2

## Description

This invention relates to liquid crystal display devices having sandwiched non-linear type material between the liquid crystal and the liquid crystal driving electrodes.

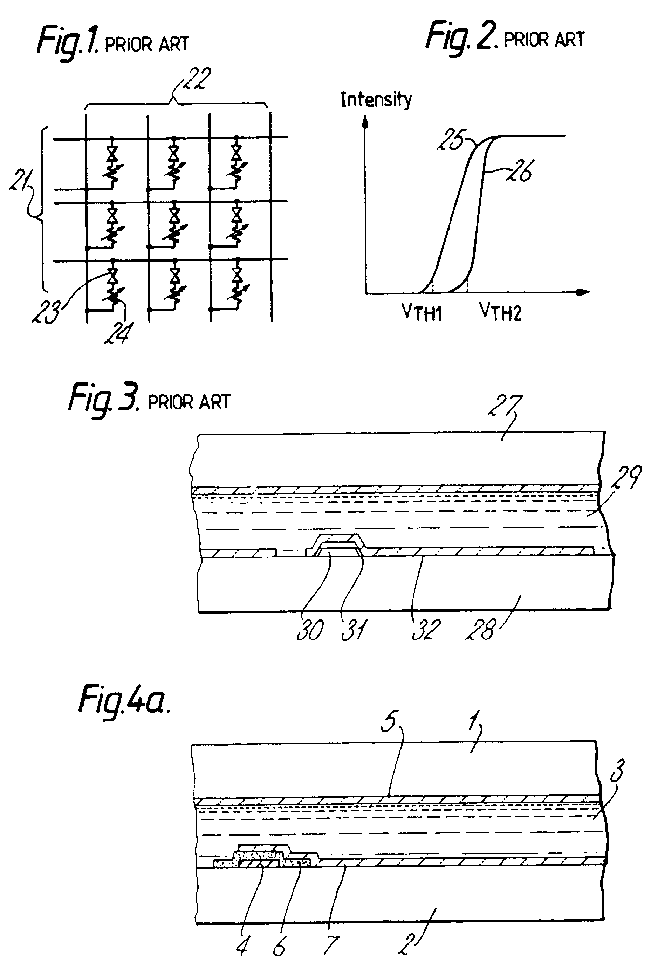

Conventionally, liquid crystal display devices have been used as compact, light and low power consumption display devices. Recently, a demand for the enlargement of the amount of displayed information has arisen. In seeking to meet this demand, the following three types of liquid crystal display devices need to be considered: MOS-type liquid crystal display devices using single crystal silicon substrates; thin film transistor (TFT) liquid crystal display devices with semi-conductive layers formed on glass substrates; and MIM-type liquid crystal display devices using non-linear elements composed of metal-insulator-metal. As a MOS-type liquid crystal display device uses single crystal silicon as its substrate, it is not possible to enlarge its size. There is a possibility of enlarging the size of thin film transistor liquid crystal display devices, but as it is necessary to form more than five layers of thin film layers, patterning is necessary, the picture element deficiency rate is high, and the device is expensive. In contrast to the above two types, the MIM-type liquid crystal display device has a relatively simple structure, with the possibility of enlarging its size. Figure 1 is a diagram of a prior art circuit in which a display panel is driven in an X-Y matrix mode, with non-linear resistive elements composed of metal-insulator-metal being serially connected with the liquid crystal. Electrodes 21 form a group of X or line electrodes. Electrodes 22 form a group of Y or row electrodes. There are usually 200 to 1.000 line electrodes and row electrodes. At each intersection of X and Y electrodes, liquid crystal 23 and non-linear resistive element 24 are formed. This type of display device is driven by a method called the multiplex driving method. In this driving method, assuming the electrical voltage to be applied to each picture elements selected to be displayed to be $V_S$, and the electrical voltage to be applied to each picture element not to be displayed to be $V_{NS}$, the driving margin can be expressed as in the following formula

$$M = \frac{V_S}{V_{NS}} = \sqrt{\frac{n + a^2 - 1}{n + (a - 2)^2 - 1}} \quad (1)$$

where

n = division number (proportional to the number of electrodes)

a = bias number (generally 1.3 to 1.4)

The bias number is found by dividing the voltage applied to a picture element during non selection by the voltage applied to a picture element at the selected time.

It will be understood that, as the division number n increases to obtain as many display picture elements as possible, the display voltage $V_S$ and the non-display voltage $V_{NS}$ of the liquid crystal gradually approach each other, because the driving margin becomes close to 1. Thus the liquid crystal needs to stand up as fast as possible. But with present liquid crystals, the division number n is only about 100, so the liquid crystal cannot stand up immediately. Therefore, to improve the standing up characteristic of this liquid crystal, non-linear resistive elements are serially connected to the liquid crystal.

Figure 2 shows the characteristic of applied voltage corresponding to the transmission factor of the prior art liquid crystal. Curve 25 is the usual characteristic of twisted nematic type liquid crystal, and curve 26 shows its characteristic when a metal-insulator-metal non-linear resistive element is serially connected to the twisted nematic type liquid crystal. In this case, the standing up of the liquid crystal becomes very fast, the threshold voltage $V_{TH}$ shifts to the high voltage side, and thus very large driving margin can be obtained.

Figure 3 is a sectional diagram of a prior art picture element in a display panel with a non-linear resistive element formed on the liquid crystal. Upper and lower transparent substrates 27 and 28 enclose liquid crystal 29. A metal electrode 30 of tantalum has an insulating layer 31 of tantalic pentoxide ($Ta_2O_5$) formed by the anodic oxidation of metal tantalum and is covered by a transparent electrode 32 for picture element display. This type of non-linear resistive element is a thin insulating film, and electric current passing through the element is called either Poole-Frenkel current, or Fowler-Nordheim tunnel current. To let such currents pass, the insulating layer must be made extremely thin in the order of about 5 to 40 nm. The non-linear resistive element and liquid crystal are serially connected, and, to display a selected element the electric charge is poured into the liquid crystal layer through the non-linear resistive element. In the case of non-display, the electric charge disappears through the resistance of the liquid crystal. Driving is conducted by multiplex driving.

To conduct smoothly the displaying and non-displaying operations of the liquid crystal device which utilises this type of non-linear resistive element, the non-linear resistive element must satisfy the following conditions: (a) the capacitance $C_{MIM}$ of the non-linear resistive element of one picture element must be less than the capacitance $C_{LC}$ of the liquid crystal: and (b) the ON resistance $R_{ON}$ of the non-linear resistive element of one picture element must be approximately one-thirtieth of the resistance $R_{LC}$ of the liquid crystal.

To satisfy the above conditions, the area of the non-linear resistive element must be less than $20\mu m^2$, and the highest electric current to pass through the non-linear resistive element must be about $1Acm^2$. The driving of the liquid crystal is matrix driving, and the electric field applied to the picture element is al-

ternating voltage. Generally when 1Acm$^2$ of electric current is repeatedly passed through the insulating layer, the breakdown of the insulator may occur when $10^4$ to $10^7$ times current passes through. Therefore, there is a problem in the life time of the insulator. Also, when using Ta$_2$O$_5$ as non-linear resistance element the size of the non-linear resistive element must be less than 20 μm$^2$ because the layer is so thin, being less than 40 nm, the C$_{LC}$ C$_{MIM}$ is so high, being more than 10. Therefore when forming a large size display panel of more than 20 cm$^2$, patterning with very high accuracy must be conducted, and it causes a decline of manufacturing yield, and high cost.

An example of the prior art is shown in GB-A-2,050,031 which discloses a liquid crystal display device having liquid crystal material sandwiched between two substrates one of which bears a plurality of column electrodes and the other of which bears a plurality of row electrodes, the row and column electrodes defining a two dimensional array of pixels at their intersections, and a plurality of non-linear resistive elements, each of which is associated with a pixel. Each non-linear resistive element consists of a MIM device having an insulating layer of tantalum pentoxide, tantalum oxynitride, aluminium oxide, silicon nitride, silicon dioxide, silicon oxynitride or silicon monoxide.

The following paragraph refers to the Contracting States Germany, United Kingdom and France only: EP-A-174 431, (citable under Art. 54(3) EPC discloses a liquid crystal display device. However, there is no disclosure of at least one of the characterising features of claims 1 and 2. According to the invention, therefore, a liquid crystal display device is as claimed in claims 1 and 2.

The following paragraph refers to the Contracting States Switzerland and Lichtenstein only :
According to the invention a liquid crystal display device is as claimed in claim 1. Preferably, the atomic composition ratio O Si = x of non-stoichiometric silicon oxide or N Si = y of non-stoichiometric silicon nitride is as follows, respectively $0.2 \leqq x \leqq 1.9$ or $0.2 \leqq y \leqq 1.3$.

Advantageously, the non-linear resistive layer between the liquid crystal material and the row electrodes extends over substantially the whole surface of the display panel of the other substrate.

The non-linear resistive layer between the liquid crystal material and the row electrodes may be composed of a plurality of layers which have different atomic composition ratios.

A transparent conductive layer may be mounted on non-linear resistive layer at each pixel.

The scope of the invention is defined by the appended claims, and how it may be carried into effect is hereinafter particularly described with reference to the accompanying drawings, in which:-

Figure 1 is a circuit diagram of a prior art display device;

Figure 2 is a graph showing the characteristic of applied voltage corresponding to the transmission factor of the prior art liquid crystal using a non-linear resistive element;

Figure 3 is a sectional diagram of a picture element in a prior art liquid crystal display device using a non-linear resistive element;

Figure 4a is a sectional diagram of a picture element in one embodiment of the liquid crystal display device according to the present invention;

Figure 4b is a graph showing the current-voltage characteristics of the non-linear resistive layer of the device of Figure 4a; and

Figures 5 and 6 are sectional diagrams similar to Figure 4a showing other embodiments of liquid crystal display device according to the present invention.

Upper and lower transparent substrates 1 and 2 (Figure 4a) made of glass enclose a liquid crystal layer which is of twisted nematic liquid crystal. A display metal electrode 4 of NiCr is formed on the lower substrate 2. A transparent conductive layer 5 is mounted on the upper substrate 1. The layers 4 and 5 form orthogonal line and row groups of electrodes. A non-linear resistive layer 6 of off-stoichiometric silicon oxide is formed by low pressure CVD to a thickness of between 50nm and 200nm and preferably of 100 nm over the electrode 4. According to AES analysis, the atomic composition ratio O Si of the silicon oxide layer is between 0.2 and 1.9 and about 0.5. A picture element electrode 7 made of transparent conductive layers overlaps the layer 6 and electrode 4. The overlapping area of the electrode 4 and picture element electrode 7 is 500μm$^2$.

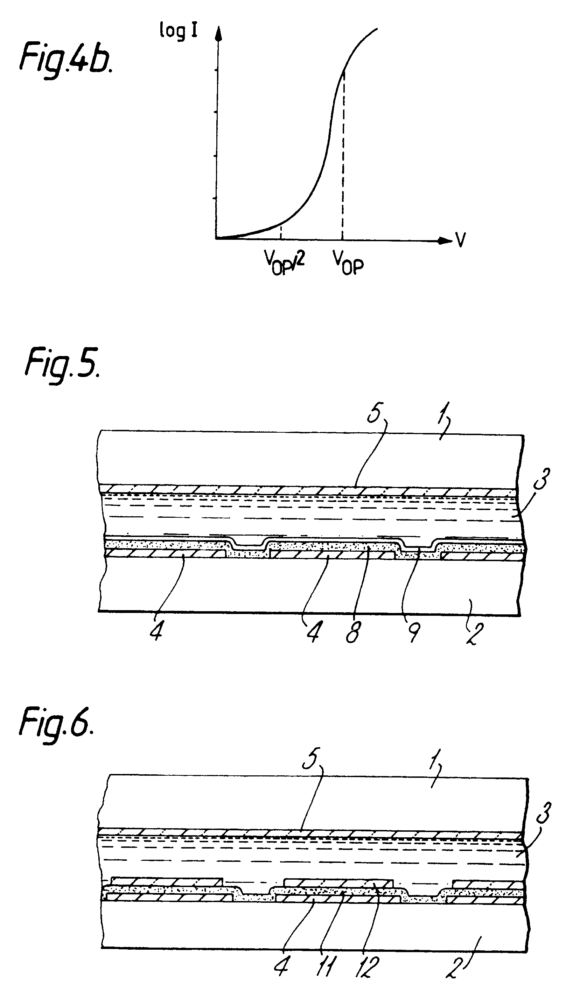

The current-voltage characteristics of the non-linear resistive layer 6 (Figure 4b) show that when the driving voltage declines from V$_{OP}$ to V$_{OP}$ 2, the electric current is reduced by more than 4 orders of magnitude. When $10^8$ times of the alternating electric field of the drive voltage V$_{OP}$ is applied to the non-linear resistive layer, breakdown does not occur, but the layer shows the same current-voltage characteristics as in its initial state. When this liquid crystal display device is driven by the multiplex driving method, the contrast ratio of the picture element became more than 15:1, and no cross talk was seen. The layer 6 is formed by the low pressure CVD and by varying the flow rates of silane gas SiH$_2$ and dinitrogen oxide gas N$_2$O, the desired current-voltage characteristic can be achieved. Alternatively, the non-linear resistive layer can be an off-stoichiometric silicon nitride layer whose atomic composition ratio N Si is between 0.2 and 1.3 and preferably about 0.5. By appropriately selecting the low rates of silane gas SiH$_4$ and ammonia NH$_3$ when conducting low pressure chemical vapour deposition, the current-voltage characteristics of the silicon nitride non-linear resistive element can be made similar to those of Figure 4b.

In a second embodiment (Figure 5) of liquid crystal display device according to the invention, the upper and lower transparent substrates 1 and 2 enclosing the liquid crystal layer 3, carry transparent electrodes 5 and 4 which are orthogonal and form line and row groups of electrodes. Upon the electrodes 4 are formed non-linear resistive layers 8 and 9 composed of off-stoichiometric silicon oxide. The resistance of the layer 9 is one order of magnitude smaller than that of the layer 8. For this purpose the layer 9 has an atomic composition ratio O Si different from, and in particular smaller than, that of the layer 8. The layers 8 and 9 are formed by low pressure chemical vapour deposition and can be formed successively by changing the flow rate of silane gas $SiH_4$ and dinitrogen oxide gas $N_2O$. The thicknesses of the non-linear resistive layers 8 and 9 are respectively 100nm and 10nm. Assuming the atom composition ratio as O Si>0.5, the non-linear resistive layers become transparent. Also by establishing the distance between the adjacent display transparent electrodes 4 at more than 40μm, the leakage of electric charge at the picture element selecting time can be kept extremely small. By constructing the non-linear resistive element as a two-layer structure, the electric field is more uniformly applied to the liquid crystal of the picture element portion, and thus the unevenness of the display on the picture element portion can be eliminated. The non-linear resistive layers extend over the whole surface of the panel except on the connecting pad portion for the display device and the outside driving circuit, so that the patterning of the non-linear resistive layer is made very easily. The two-layer non-linear resistive element may be of off-stoichiometric silicon nitride. The non-linear resistive layer may be of more than two layers which have different atomic composition ratios.

In another embodiment (Figure 6) of liquid crystal display device according to the invention, a transparent conductive layer 12 is formed at the picture element portion between a transparent non-linear resistive layer 11 on the electrodes 4 and the liquid crystal layer 3. The non-linear resistive layer 11 is of off-stoichiometric silicon oxide or nitride and extends over the whole surface of the display panel except on the connecting pad portion and the outside driving circuit. Its thickness is between 50 and 200nm. The transparent layer 12 that contacts the liquid crystal layer 3 is formed of indium tin oxide (ITO) and has an area of about 200μm², so that pattern accuracy is relieved.

A twisted nematic liquid crystal is utilised, and the outer surfaces of the upper and lower transparent substrates are sandwiched by a pair of polarisers. The non-linear resistive layer can be formed with normal pressure chemical vapour deposition, plasma chemical vapour deposition, sputtering or equivalent methods.

Because one or a plurality of layers of an off-stoichiometric semiconductor insulator such as silicon oxide or nitride is used as non-linear resistive element, the device life-time is long, the accuracy of the pattern-forming of the non-linear resistive layer is reduced, its size is easy to increase, and it can be manufactured at very low cost.

## Claims

### Claims for the following Contracting States : GE, UK, FR

1. A liquid crystal display device having liquid crystal material (3) sandwiched between two substrates (1, 2), one of which bears a plurality of column electrodes (5), and the other of which bears a plurality of row electrodes (4), the row and column electrodes defining a two dimensional array of pixels at their intersections, and a non-linear resistive layer (6; 8, 9; 11) of silicon nitride, having a non-linear voltage-current characteristic, mounted between the liquid crystal material (3) and the row electrodes (4) on the other substrate (2), to form a plurality of non-linear resistive elements, each of which is associated with a pixel, characterised in that the resistive layer (6; 8, 9; 11) is substantially composed of a non-stoichiometric component of silicon nitride, with the atomic composition ratio N/Si = y and $0.2 \leqq y \leqq 1.3$ and in that the thickness of the resistive layer is in the range of 50 nm to 200 nm.

2. A liquid crystal display device having liquid crystal material (3) sandwiched between two substrates (1, 2), one of which bears a plurality of column electrodes (5), and the other of which bears a plurality of row electrodes (4), the row and column electrodes defining a two dimensional array of pixels at their intersections, and a non-linear resistive layer (6; 8, 9; 11) of silicon oxide, having a non-linear voltage-current characteristic, mounted between the liquid crystal material (3) and the row electrodes (4) on the other substrate (2), to form a plurality of non-linear resistive elements, each of which is associated with a pixel, characterised in that the resistive layer (6; 8, 9; 11) is substantially composed of a non-stoichiometric component of silicon oxide with the atomic composition ratio O/Si=x and $0.2 \leqq x \leqq 1.9$, and in that the non-linear voltage-current characteristic is such that a magnitude of current, through the non-linear resistive layer, which is applied while a driving voltage Vop is applied to the non-linear resistive layer is more than four orders of the magnitude of current which is applied while the driving voltage is reduced by half Vop/2.

3. A device as claimed in claim 1 or 2, in which the non-linear resistive layer (8, 9; 11) between the liquid crystal material (3) and the row electrodes (4) extends over substantially the whole surface of the display panel of the other substrate (2).

4. A device as claimed in claim 1, 2 or 3, wherein the non-linear resistive layer (8, 9) between the liquid crystal material (3) and the row electrodes (4) is composed of a plurality of layers which have different atomic composition ratios.

5. A device as claimed in claim 1, 2 or 3, in which the non-linear resistive layer (11) has mounted thereon a transparent conductive layer (12) at each pixel.

6. A device as claimed in claim 1, in which the non-linear voltage-current characteristic is such that a magnitude of current, through the non-linear resistive layer, which is applied while a driving voltage Vop is applied to the non-linear resistive layer is more than four orders of the magnitude of current which is applied while the driving voltage is reduced by half Vop/2.

**Claims for the following Contracting States : CH, LI**

1. A liquid crystal display device having liquid crystal material (3) sandwiched between two substrates (1, 2), one of which bears a plurality of column electrodes (5), and the other of which bears a plurality of row electrodes (4), the row and column electrodes defining a two dimensional array of pixels at their intersections, and a non-linear resistive layer (6; 8, 9; 11) of silicon oxide or silicon nitride, having a non-linear voltage-current characteristic, mounted between the liquid crystal material (3) and the row electrodes (4) on the other substrate (2), to form a plurality of non-linear resistive elements, each of which is associated with a pixel, characterised in that the resistive layer (6; 8, 9; 11) is substantially composed of a non-stoichiometric component of silicon oxide or silicon nitride.

2. A device as claimed in claim 1, characterised in that the atomic composition ratio O Si = x of non-stoichiometric silicon oxide or N Si = y of non-stoichiometric silicon nitride is as follows, respectively,

$$0.2 \leqq x \leqq 1.9 \text{ or } 0.2 \leqq y \leqq 1.3.$$

3. A device as claimed in claim 1 or 2, characterised in that the non-linear resistive layer (8, 9; 11) between the liquid crystal material (3) and the row electrodes (4) extends over substantially the whole surface of the display panel of the other substrate (2).

4. A device as claimed in claim 1, 2 or 3, wherein the non-linear resistive layer (8, 9) between the liquid crystal material (3) and the row electrodes (4) is composed of a plurality of layers which have different atomic composition ratios.

5. A device as claimed in claim 1, 2 or 3, characterised in that the non-linear resistive layer (11) has mounted thereon a transparent conductive layer (12) at each pixel.

6. A device as claimed in any one of the preceding claims, in which the non-linear voltage-current characteristic is such that a magnitude of current, through the non-linear resistive layer, which is applied while a driving voltage Vop is applied to the non-linear resistive layer is more than four orders of the magnitude of current which is applied while the driving voltage is reduced by half Vop/2.

**Patentansprüche**

**Patentansprüche für folgende Vertragsstaaten : DE, GB, FR**

1. Flüssigkristallanordnung mit einem zwischen zwei Substraten (1, 2) angeordneten Flüssigkeitsmaterial (3), einer Vielzahl von Spaltenelektroden (5) auf dem einen Substrat, einer Vielzahl von Zeilenelektroden (4) auf dem anderen Substrat, wobei die Zeilen- und Spaltenelektroden an ihren Schnittpunkten ein zweidimensionales Raster bilden, und einer zwischen dem Flüssigkristallmaterial (3) und den Zeilenelektroden (4) auf dem anderen Substrat (2) angeordneten nichtlinearen Widerstandsschicht (6; 8, 9; 11) aus Siliziumnitrid mit einer nichtlinearen Spannungs-Widerstandscharakteristik zur Bildung einer Vielzahl von jeweils einem Bildpunkt zugeordneten nichtlinearen Widerstandselementen, **dadurch gekennzeichnet,** daß die Widerstandsschicht (6; 8, 9; 11) im wesentlichen durch eine nichtstöichimetrische Komponente von Siliziumnitrid mit dem Atomverhältnis N/Si = y und $0.2 \leqq y \leqq 1.3$ gebildet ist, und daß die Dicke der Widerstandsschicht im Bereich von 50 bis 200 nm liegt.

2. Flüssigkristallanordnung mit einem zwischen zwei Substraten (1, 2) angeordneten Flüssigkeitsmaterial (3), einer Vielzahl von Spaltenelektroden (5) auf dem einen Substrat, einer Vielzahl von Zeilenelektroden (4) auf dem anderen Substrat, wobei die Zeilen- und Spaltenelektroden an ihren Schnittpunkten ein zweidimensionales Raster bilden, und einer zwischen dem Flüssigkristallmaterial (3) und den Zeilenelektroden (4) auf dem anderen Substrat (2) angeordneten nichtlinearen Widerstandsschicht (6; 8, 9; 11) aus Siliziumnitrid mit einer nichtlinearen Spannungs-Widerstandscharakteristik zur Bildung einer vielzahl von jeweils einem Bildpunkt zugeordneten nichtlinearen Widerstandelementen, **dadurch gekennzeichnet,** daß die Widerstandsschicht (6; 8, 9; 11) im wesentlichen durch eine nichtstöchiometrische Komponente von Siliziumoxid mit dem Atomverhältnis O/Si = x und $0,2 \leqq x \leqq 1,9$ gebildet ist, und daß die nichtlineare Spannungs-Widerstandscharakteristik so beschaffen ist, daß eine Größe des Stroms durch das nichtlineare Widerstandselement, welche bei Anlegen einer Treiberspannung Vop an das nichtlineare Widerstandselement eingespeist wird, um vier Größenordnungen größer als die Größe bei einem Anlegen der um Vop/2 reduzierten Treiberspannung ist.

3. Anordnung nach Anspruch 1 oder 2, in der die nichtlineare Widerstandsschicht (8, 9; 11) zwischen dem Flüssigkristallmaterial (3) und den Zeilenelektroden (4) im wesentlichen über die gesamte Fläche der Anzeigeschicht des anderen Substrats (2) verläuft.

4. Anordnung nach Anspruch 1, 2 oder 3, in der die nichtlineare Widerstandsschicht (8, 9) zwischen dem Flüssigkristallmaterial (3) und den Zeilenelektroden (4) durch eine Vielzahl von Schichten mit unterschiedlichen Atomverhältnissen gebildet ist.

5. Anordnung nach Anspruch 1, 2 oder 3, in der auf der nichtlinearen Widerstandsschicht (11) in jedem Bildpunkt eine transparente leitende Schicht (12) angeordnet ist.

6. Anordnung nach den vorhergehenden Ansprüchen, in der die Größe des Stroms durch das nichtlineare Widerstandselement bei Anlegen einer Treiberspannung Vop an das nichtlineare Widerstandselement um vier Größenordnungen größer als die Größe des Stroms ist, der bei Reduzierung der Treiberspannung um Vop/2 eingespeist wird.

**Patentansprüche für folgende Vertragsstaaten : CH, LI**

1. Flüssigkristallanordnung mit einem zwischen zwei Substraten (1, 2) angeordneten Flüssigkeitsmaterial (3), einer Vielzahl von Spaltenelektroden (5) auf dem einen Substrat, einer Vielzahl von Zeilenelektroden (4) auf dem anderen Substrat, wobei die Zeilen- und Spaltenelektroden an ihren Schnittpunkten ein zweidimensionales Raster bilden, und einer zwischen dem Flüssigkristallmaterial (3) und den Zeilenelektroden (4) auf dem anderen Substrat (2) angeordneten nichtlinearen Widerstandsschicht (6; 8, 9; 11) aus Siliziumnitrid mit einer nichtlinearen Spannungs-Widerstandscharakteristik zur Bildung einer Vielzahl von jeweils einem Bildpunkt zugeordneten nichtlinearen Widerstandelementen, **dadurch gekennzeichnet,** daß die Widerstandsschicht (6; 8, 9; 11) im wesentlichen aus einer nichtstöchiometrischen Komponente aus Siliziumoxid oder Siliziumnitrid zusammengesetzt ist.

2. Anordnung nach Anspruch 1, **dadurch gekennzeichnet,** daß die Atomzusammensetzung OSi = x des nichtstöchiometrischen Siliziumoxids bzw. NSi = y des nichtstoichiometrischen Siliziumnitrids durch die Beziehung

$$0,2 \leqq x \leqq 1,9 \text{ bzw. } 0,2 \leqq y \leqq 1,3$$

gegeben ist.

3. Anordnung nach Anspruch 1 oder 2, **dadurch gekennzeichnet,** daß die nichtlineare Widerstandsschicht (8, 9; 11) zwischen dem Flüssigkristallmaterial (3) und den Zeilenelektroden (4) im wesentlichen über die gesamte Fläche der Anzeigeschicht des anderen Substrats (2) verläuft.

4. Anordnung nach Anspruch 1, 2 oder 3, **dadurch gekennzeichnet,** daß die nichtlineare Widerstandsschicht (8, 9) zwischen dem Flüssigkristallmaterial (3) und den Zeilenelektroden (4) durch eine Vielzahl von Schichten mit unterschiedlichen Atomverhältnissen gebildet ist.

5. Anordnung nach Anspruch 1, 2 oder 3, **dadurch gekennzeichnet,** daß auf der nichtlinearen Widerstandsschicht (11) in jedem Bildpunkt eine transparente leitende Schicht (12) angeordnet ist.

6. Anordnung nach den vorhergehenden Ansprüchen, in der die Größe des Stroms durch das nichtlineare Widerstandselement bei Anlegen einer Treiberspannung $V_{op}$ an das nichtlineare Widerstandselement um vier Größenordnungen größer als die Größe des Stroms ist, der bei Reduzierung der Treiberspannung um Vop/2 eingespeist wird.

## Revendications

### Revendications pour les Etats contractants suivants : DE, GB, FR

1. Un dispositif d'affichage à cristal liquide comportant une matière à cristal liquide (3) intercalée entre deux substrats (1, 2), dont l'un porte un ensemble d'électrodes de colonne (5), et l'autre porte un ensemble d'électrodes de rangée (4), les électrodes de rangée et de colonne définissant un réseau bidimensionnel de pixels à leurs intersections, et une couche résistive non linéaire (6; 8, 9; 11) de nitrure de silicium, ayant une caractéristique tension-courant non linéaire, placée entre la matière à cristal liquide (3) et les électrodes de rangée (4) sur l'autre substrat (2), pour former un ensemble d'éléments résistifs non linéaires, chacun d'eux étant associé à un pixel, caractérisé en ce que la couche résistive (6; 8, 9; 11) est pratiquement constituée par un composé non stoechiométrique de nitrure de silicium, avec le rapport de composition N/Si=y et $0,2 \leqq y \leqq 1,3$, et en ce que l'épaisseur de la couche résistive est dans la plage de 50 nm à 200 nm.

2. Un dispositif d'affichage à cristal liquide comportant une matière à cristal liquide (3) intercalée entre deux substrats (1, 2), dont l'un porte un ensemble d'électrodes de colonne (5) et l'autre porte un ensemble d'électrodes de rangée (4), les électrodes de rangée et de colonne définissant un réseau bidimensionnel de pixels à leurs intersections, et une couche résistive non linéaire (6; 8, 9; 11) d'oxyde de silicium, ayant une caractéristique tension-courant non linéaire, placée entre la matière à cristal liquide (3) et les électrodes de rangée (4) sur l'autre substrat (2), pour former un ensemble d'éléments résistifs non linéaires, chacun d'eux étant associé à un pixel, caractérisé en ce que la couche résistive (6; 8, 8; 11) est pratiquement constituée par un composé non stoechiométrique d'oxyde de silicium avec le rapport de composition atomique O/Si=x et $0,2 \leqq x \leqq 1,9$, et en ce que la caractéristique tension-courant non linéaire est telle qu'une valeur de courant, traversant la couche résistive non linéaire, qui est appliquée lorsqu'une tension d'attaque Vop est appliquée à la couche résistive non linéaire, est supérieure de plus de quatre ordres de grandeur à la valeur du courant qui est appliquée lorsque la tension d'attaque est réduite de moitié à Vop/2.

3. Un dispositif selon la revendication 1 ou 2, dans lequel la couche résistive non linéaire (8, 9; 11) entre la matière à cristal liquide (3) et les électrodes de rangée (4) s'étend sur la presque totalité de la surface du panneau d'affichage, sur l'autre substrat (2).

4. Un dispositif selon la revendication 1, 2 ou 3, dans lequel la couche résistive non linéaire (8, 9) qui se trouve entre la matière à cristal liquide (3) et les électrodes de rangée (4) est constituée par un ensemble de couches qui ont des rapports de composition atomique différents.

5. Un dispositif selon la revendication 1, 2 ou 3, dans lequel une couche conductrice transparente (12) est placée, à chaque pixel, sur la couche résistive non linéaire.

6. Un dispositif selon la revendication 1, dans lequel la caractéristique tension-courant non linéaire est telle qu'une valeur de courant, à travers la couche résistive non linéaire, qui est appliquée lorsqu'une tension d'attaque Vop est appliquée à la couche résistive non linéaire, est supérieure de plus de quatre ordres de grandeur à la valeur de courant qui est appliquée lorsque la tension d'attaque est réduite de moitié, à Vop/2.

### Revendications pour les Etats contractants suivants : CH, LI

1. Un dispositif d'affichage à cristal liquide comportant une matière à cristal liquide (3) intercalée entre deux substrats (1, 2)n dont l'un porte un ensemble d'électrodes de colonne (5), et l'autre porte un ensemble d'électrodes de rangée (4), les électrodes de rangée et de colonne définissant un réseau bidimensionnel de pixels à leurs intersections, et une couche résistive non linéaire (6; 8, 9; 11) d'oxyde de silicium ou de nitrure de silicium, ayant une caractéristique tension-courant non linéaire, placée entre la matière à cristal liquide (3) et les électrodes de rangée (4) sur l'autre substrat (2), pour former un ensemble d'éléments résistifs non linéaires, chacun d'eux étant associé à un pixel, caractérisé en ce que la couche résistive (6; 8, 9; 11) est pratiquement constituée par un composé non stoechiométrique d'oxyde de silicium ou de nitrure de silicium.

2. Un dispositif selon la revendication 1, caractérisé en ce que le rapport de composition atomique O/Si=x de l'oxyde de silicium non stoechiométrique, ou N/Si=y du nitrure de silicium non stoechiométrique, satisfait respectivement les conditions suivantes :
$$0,2 \leqq x \leqq 1,9 \text{ ou } 0,2 \leqq y \leqq 1,3.$$

3. Un dispositif selon la revendication 1 ou 2, caractérisé en ce que la couche résistive non linéaire (8, 9; 11) qui se trouve entre la matière à cristal liquide (3) et les électrodes de rangée (4) s'étend sur la presque totalité de la surface du panneau d'affichage, sur l'autre substrat (2).

4. Un dispositif selon la revendication 1, 2 ou 3, dans lequel la couche résistive non linéaire (8, 9) qui se trouve entre la matière à cristal liquide (3) et les électrodes de rangée (4) est constituée par un ensemble de couches qui ont des rapports de composition atomique différents.

5. Un dispositif selon la revendication 1, 2 ou 3, caractérisé en ce qu'une couche conductrice transparente (12) est placée, à chaque pixel, sur la couche résistive non linéaire (11).

6. Un dispositif selon l'une quelconque des revendications précédentes, dans lequel la caractéristique tension-courant non linéaire est telle qu'une valeur de courant, à travers la couche résistive non linéaire, qui est appliquée lorsqu'une tension d'attaque Vop est appliquée à la couche résistive non linéaire, est supérieure de plus de quatre ordres de grandeur à la valeur de courant qui est appliquée lorsque la tension d'attaque est réduite de moitié, à Vop/2.

**Fig.1.** PRIOR ART

22

21

23

24

**Fig.2.** PRIOR ART

Intensity

25

26

VTH1    VTH2

**Fig. 3.** PRIOR ART

27

29

30  31  32  28

**Fig.4a.**

5  1

3

4  6  7  2

*Fig.4b.*

*Fig.5.*

*Fig.6.*